Europäisches Patentamt

(19) **European Patent Office**

**Office européen des brevets**

(11) Publication number: **0 029 192**
A2

(12) # EUROPEAN PATENT APPLICATION

(21) Application number: **80106904.8**

(51) Int. Cl.³: **B 62 M 3/08,** A 43 B 5/14

(22) Date of filing: **08.11.80**

(30) Priority: **15.11.79 IT 8255279**

(71) Applicant: **Mazzarolo, Sante, Via Caldiroro, 36, I-31010 Coste di Maser (Province of Treviso) (IT)**

(43) Date of publication of application: **27.05.81 Bulletin 81/21**

(72) Inventor: **Mazzarolo, Sante, Via Caldiroro, 36, I-31010 Coste di Maser (Province of Treviso) (IT)**

(84) Designated Contracting States: **AT BE CH DE FR GB LI LU NL SE**

(74) Representative: **Modiano, Guido et al, MODIANO & ASSOCIATI S.A.S. Via Meravigli, 16, I-20123 Milan (IT)**

(54) **Detachable locking device for fastening a cyclist's shoe to the pedal of racing bicycles and the like.**

(57) A detachable locking device for fastening a cyclist's shoe to the pedal of racing bicycles and the like comprises guiding elements (11, 12, 32) defined on the pedal body (2) and a coupling block (13, 30) associable with the cyclist's shoe and provided with a bayonet coupling (16, 17, 31) detachably insertable in the guiding elements (11, 12, 32) and disengageable therefrom by sliding along a direction substantially parallel to the pedal rotation axis.

ACTORUM AG

COMPLETE DOCUMENT

EP 0 029 192 A2

- 2 -

0029192

This invention relates to a detachable locking device for fastening a cyclist's shoe to the pedal of a racing or the like bicycle.

As is known, the pedals of racing bicycles are currently constructed from a body which is freely rotatable about its own axis and supports a toe clip wherein the toe portion of the shoe is introduced. The shoe is then fastened to the pedal by means of a strap having an adjusting device, which strap is connected both to the pedal and toe clip.

This approach, while affording the advantage of an increased pedalling action efficiency and ensuring at the same time a constant and tight connection of the foot with the pedal, also represents a potential source of serious risk for the cyclist, especially in the event of a tumble.

In fact, the lock established between the cyclist's foot and pedal does not allow, in the event of a tumble or any other dangerous situation, a quick disengagement of the foot from the pedal in order to bring the foot to rest on the ground, such that the ensueing damage can be at least attenuated.

This invention sets out to eliminate the drawbacks of such conventional arrangements by providing a detachable locking device which, while ensuring a stable connection of the foot to the pedal when running, allows the cyclist to instantaneously disengage his/her feet from the pedals in a dangerous situation or whenever required.

Within that general aim, it is possible to arrange that the detachable locking device of this invention has a simple structure and is quite reliable and functional in operation.

It is further possible to arrange that the detachable locking device according to the invention, while affording all the advantages of conventional pedal arrangements which maximize the efficiency of the pedalling action, also improves its safety, by preventing all the risks which are inherent to the type of connection described hereinabove.

According to one aspect of the present invention, there is provided a detachable locking device for fastening a cyclist's shoe to the pedal of racing bicycles and the like, characterized in that it comprises guiding elements defined on the pedal body and extending substantially parallel to the axis of rotation of said pedal about itself, there being further provided a coupling block associable with the cyclist's shoe and having bayonet coupling means detachably insertable in said guiding elements and disengageable therefrom by moving along a direction substantially parallel to said rotation axis.

Further features and advantages will be more clearly apparent from the detailed description of a detachable locking device for fastening a cyclist's shoe to the pedal of a bicycle, illustrated by way of example and not of limitation in the accompanying drawing, where:

Figure 1 illustrates diagramatically a known arrangement of the general type mentioned in the preamble;

Figure 2 shows the detachable locking device according to this invention, as one possible embodiment thereof, in side elevation and partly in section; and

Figure 3 shows a further embodiment of the invention.

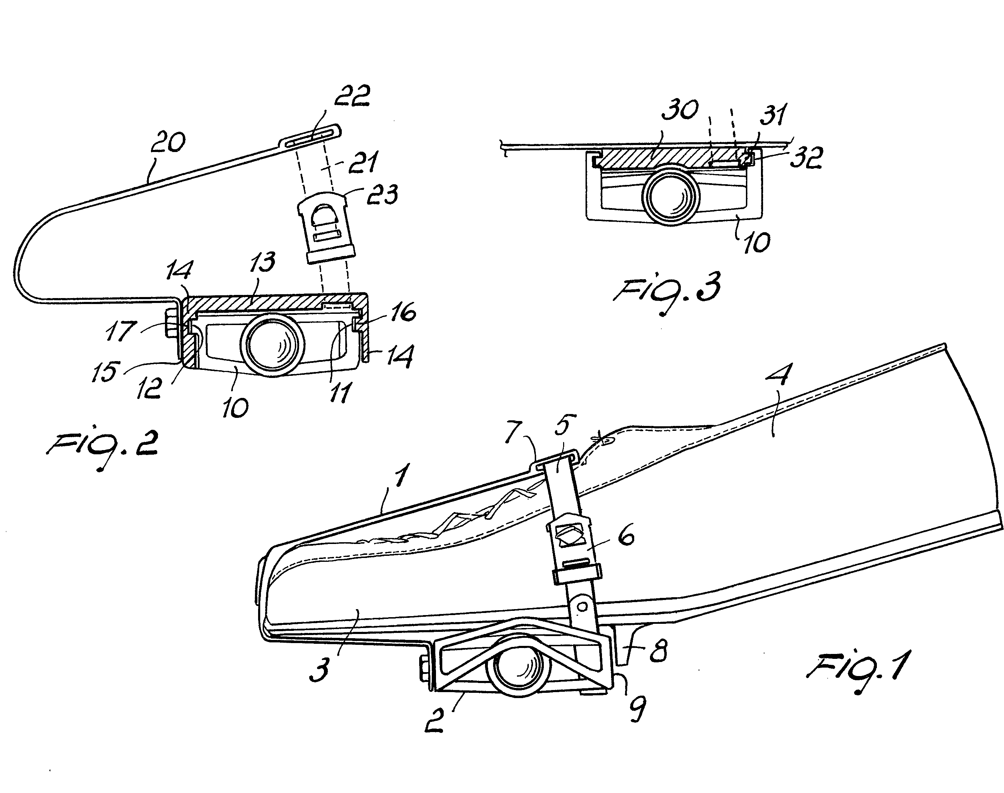

With reference to Figure 1, there is illustrated a locking device of a known type, which comprises essentially a toe clip 1, having any desired configuration, which is attached to the body 2 of the pedal. Into the toe clip 1, the toe portion 3 of a sport shoe 4 is inserted, the shoe being then secured by tightening a strap 5 provided with adjustment means 6 of any desired configuration.

The strap 5 is linked both to the pedal 2 and toe clip 1, being passed through an eye 7 in the latter.

On the sole of the shoe 4, a projecting detent lug 8 is provided for abutment against one side 9 of the pedal, such as to improve the efficiency of the pedalling action.

- 5 -

0029192

In this embodiment, and as mentioned hereinabove, the shoe 4 is stably secured to the pedal, and can be released from the pedal only by manipulating the adjustment means 6 which are operative to loose the strap 5; as is obvious, this operation is not one that the cyclist can perform in a condition of immediate danger, and he/she remains exposed to the risk of disastrous tumbles.

In Figure 2, there is illustrated a preferred, though not limitative, embodiment of the detachable locking device according to this invention, which comprises guiding elements defined on the body 10 of the pedal. Said guiding elements comprise a groove 11 on one side of the pedal, and a projection 12 on the opposite side thereof, which extend both substantially parallel to the axis of rotation of the pedal about itself.

The device also comprises a coupling block which, with specific reference to Figure 2, comprises an element 13 having a substantially U-like configuration in cross-section and being set astride the body 10 of the pedal.

On the legs 14 of the element 13, there are provided bayonet elements arranged to match the guiding elements defined on the body 10, and including an insertion projection or lug 16 which can be coupled with the groove 11, and an insertion groove 17 which can be coupled with the projection 12.

The insertion projection 16 and insertion

- 6 -

0029192

groove 17 also extend substantially parallel to the axis of the pedal, and enable a detachable type of engagement of the coupling block 13 with the body 10 of the pedal, by sliding along a direction parallel to said axis.

To facilitate the insertion operation, the guiding elements 11 and 12, and the bayonet elements 16 and 17, may be so designed as to present a lead-in to the initial insertion which would make the coupling easier, whilst the successive locking effect is provided by a precision fit construction and surface machining of the grooves 11 and 17 and corresponding projections 12 and 16, thereby eliminating any chance of play. To said coupling block 13, there is connected, in the usual manner, a toe clip, indicated at 20, which will be provided with a fastening strap 21 having adjustment means 23 and engaging with the block 13 and with a slot 22 defined on the clip itself, thereby a traditional locking relationship is achieved between the shoe and toe clip.

The most peculiar aspect of the invention is that in an emergency, or whenever required, the block 13 may be withdrawn or extracted by moving it along a parallel direction to the pedal axis, which results in the removal of the link between the cyclist's foot and the pedal body.

It should be noted that in pedalling, and in normal conditions, all the efforts involved are exerted in directions which are perpendicular to the pedal axis and, as a result, no forces are ever generated which may tend to dislodge the block 13 from the body of the pedal 10.

With reference to Figure 3, a further embodiment, similar in principle to the preceding one, will be described, wherein the coupling block comprises a plate 30 provided, on the side edges thereof, with longitudinal projections 31 adapted for insertion, essentially in a similar manner to the preceding one, into recesses 32 extending parallel to the axis on the pedal body, again indicated at 10.

In this embodiment, the plate 30 can be rigidly attached to the sole of the shoe, the foot locking and adjusting means being arranged directly on the shoe itself, not shown in Figure 3.

The coupling of the plate 30 to the body of the pedal 10 is again obtained by sliding along a direction substantially parallel to the rotation axis of the pedal, whilst emergency disengagement is again accomplished by sliding the plate 30 outwardly with respect to the body 10 along a direction substantially parallel to the pedal axis.

It will be appreciated from the foregoing description that the invention achieves its objects. In particular, it is noteworthy that the coupling described affords maximum pedalling efficiency, in that it creates a stable and reliable link between the foot and pedal against any efforts applied during the pedalling activity, while it

0029192

affords the possibility of instantaneously disengaging the foot from the pedal by a movement of the foot in a parallel direction to the pedal axis, along which direction, in normal pedalling activity, no efforts are exerted, thereby no incidental or unintentional disengagement of the foot from the pedal is likely to occur.

The invention as described is susceptible to many modifications and variations without departing from the scope of the instant inventive concept. Furthermore, all of the details may be replaced with other, technically equivalent, elements.

In practicing the invention, the materials employed, on condition that they are compatible with the specific application intended, and the dimensions and contingent shapes may be any ones, as dictated by individual applicational requirements.

## CLAIMS

1. A detachable locking device for fastening a cyclist's shoe to the pedal of racing bicycles and the like, characterized in that it comprises guiding elements (11, 12, 32) defined on the pedal body (2) and extending substantially parallel to the axis of rotation of said pedal about itself, there being further provided a coupling block (13, 30) associable with the cyclist's shoe and having bayonet coupling means (16, 17, 31) detachably insertable in said guiding elements (11, 12, 32) and disengageable therefrom by moving along a direction substantially parallel to said rotation axis.

2. A detachable locking device according to Claim 1, characterized in that said coupling block comprises an element (13) having a substantially U-like cross sectional configuration and being adapted to be positioned astride said pedal body (2).

3. A detachable locking device according to the preceding claims, characterized in that said guiding elements (11, 12, 32) comprise a groove (11) and a projection (12) provided on opposite sides of said pedal body (2) and extending substantially parallel to the axis of rotation of said pedal about itself, said bayonet coupling means comprising correspondingly an insertion projection (16) and an insertion groove (17), said insertion projection (16) and insertion groove (17) being respectively coupleable with said groove (11) and said projection (12).

4. A detachable locking device according to one or more of the preceding claims, characterized in that it comprises lead-in means effective to facilitate the initial insertion movement of said coupling bayonet elements (16, 17, 31) into said guiding elements (11, 12, 32).

5. A detachable locking device according to one or more of the preceding claims, characterized in that said coupling block comprises a plate (30) provided with longitudinal projections (31) on the sides thereof, said longitudinal projections (31) being adapted for insertion into longitudinal recesses (32) correspondingly defined in said pedal body (2).

6. A detachable locking device according to one or more of the preceding claims, characterized in that said coupling block (13) is rigidly associated with a toe clip (20) for accommodating and fastening said shoe therein.

7. A detachable locking device according to one or more of the preceding claims, characterized in that said coupling body (30) is rigidly associated with the sole of said shoe.

22

20

21

23

14 13

17 16

15 14

12

10 11

Fig. 2

30 31

32

10

Fig. 3

4

7 5

1

6

3

8

2 9

Fig. 1

0029192